Europäisches Patentamt

European Patent Office

Office européen des brevets

(19)

(11) Veröffentlichungsnummer: **0 015 313
B1**

(12) # EUROPÄISCHE PATENTSCHRIFT

(45) Veröffentlichungstag der Patentschrift:
06.07.83

(51) Int. Cl.³: **H 04 B 7/26**

(21) Anmeldenummer: **79104822.6**

(22) Anmeldetag: **01.12.79**

(54) Kennungs- und Notrufsignalauswerter für zentrale Funkstationen.

(30) Priorität: **05.03.79 DE 2908557**

(43) Veröffentlichungstag der Anmeldung:
**17.09.80 Patentblatt 80/19**

(45) Bekanntmachung des Hinweises auf die Patenterteilung:
**06.07.83 Patentblatt 83/27**

(84) Benannte Vertragsstaaten:
**AT BE DE FR GB IT LU NL SE**

(56) Entgegenhaltungen:
**DE-A-2 538 309
DE-B-2 320 722
IEEE TRANSACTIONS ON VEHICULAR TECH-
NOLOGY, Band VT-18, Nr. 3, November 1969, New
York, US, RYPINSKI: »Alarm and identification
features of the Southern California Rapid Transit
District Bus Radio System«, Seiten 101 bis 105
NACHRICHTENTECHNISCHE ZEITSCHRIFT
Band 31, Nr. 4, 1978, Berlin, DE, HIPP: »Funkbetriebsleitsysteme«, Seiten 285 bis 289**

(73) Patentinhaber: **ROBERT BOSCH GMBH, Postfach 50,
D-7000 Stuttgart 1 (DE)**

(72) Erfinder: **Dallmann, Horst, Wiersichweg 5,
D-1000 Berlin 13 (DE)**
Erfinder: **Wazeck, Jürgen, Dr.-Ing., Wiltinger
Strasse 20c, D-1000 Berlin 28 (DE)**

(74) Vertreter: **Schmidt, Hans-Ekhardt, Robert Bosch GmbH
Geschäftsbereich Elektronik Patent- und
Lizenzabteilung Forckenbeckstrasse 9-13,
D-1000 Berlin 33 (DE)**

## Kennungs- und Notrufsignalauswerter für zentrale Funkstationen

### Stand der Technik

Die Erfindung geht aus von einem Kennungs- und Notrufsignalauswerter nach der Gattung des Hauptanspruchs.

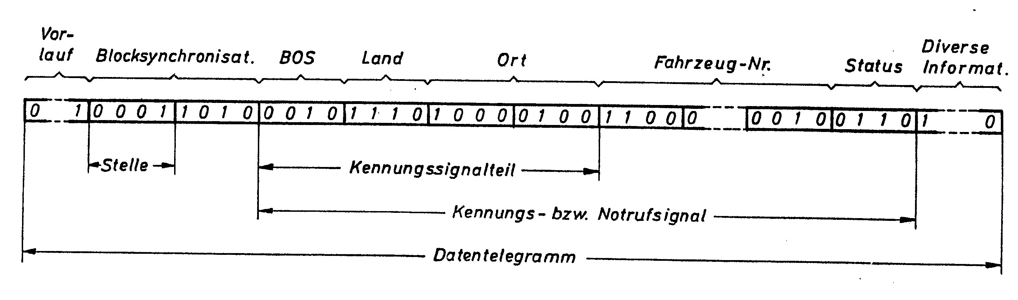

Es sind Kennungs- und Notrufsignalauswerter für zentrale Funksende- und -empfangsstationen — im folgenden zentrale Funkstationen genannt — bekannt (DE-A-2 538 309), mit deren Hilfe die im Funkversorgungsgebiet einer zentralen Funkstation operierenden, mit einem Kennungs- und Notrufsignalgeber ausgerüsteten mobilen Funksende- und -empfangsstationen — im folgenden mobilen Funkstationen genannt — identifiziert werden können. Jede mobile Funkstation sendet beim Betätigen ihrer Sendetaste zwangsläufig ein Kennungssignal und beim Betätigen ihrer Notruftaste ein Notrufsignal an die ihr zugeordnete zentrale Funkstation aus. Kennungs- und Notrufsignal sind beispielsweise Bestandteil eines binären Datentelegramms; vgl. das in der Zeichnung dargestellte Schema eines Datentelegramms. Derartige Datentelegramme werden beispielsweise in einem in der Bundesrepublik Deutschland als Funkmeldesystem bezeichneten System angewendet. Jedes Datentelegramm umfaßt eine bestimmte Anzahl von Stellen zu je vier Bit, und neun Stellen des Datentelegramms bilden ein Kennungs- bzw. Notrufsignal. Vier Stellen des Kennungs- bzw. Notrufsignals werden im folgenden als Kennungssignalteil bezeichnet, der unter anderem das Funkgebiet der jeweiligen zentralen Funkstation und die dieser zugeordneten mobilen Funkstationen kennzeichnet. Durch diese Art der Kennzeichnung wird sichergestellt, daß mobile Stationen, die dieselbe Fahrzeugnummer haben, die aber zu verschiedenen zentralen Funkstationen bzw. Funkgebieten gehören, eindeutig identifiziert werden können.

Kennungssignal und Notrufsignal unterscheiden sich lediglich dadurch, daß das Notrufsignal an der in der Zeichnung mit »Status« bezeichneten Stelle eine Notrufinformation aufweist, während das Kennungssignal an dieser Stelle eine andere Information enthält.

Das sichere Unterscheiden von mobilen Funkstationen, die verschiedenen Funkgebieten angehören, ist insbesondere dann wichtig, wenn mobile Funkstationen zum Beispiel im Katastrophenfall in einem einzigen Funkgebiet operieren müssen.

Für den normalen Funkbetrieb — das heißt, wenn jede mobile Funkstation sich in dem ihr zugeordneten Funkgebiet aufhält — ist es für das Bedienungspersonal einer zentralen Funkstation lästig, wenn auf der Anzeigevorrichtung immer das komplette Kopplungssignal angezeigt wird. Dann kann es nämlich leicht zu Verwechslungen von mobilen Funkstationen kommen, wenn unvorhergesehenerweise eine mobile Funkstation eines anderen Funkgebietes in das zu der betreffenden zentralen Funkstation gehörende Funkgebiet gelangt.

### Vorteile der Erfindung

Der erfindungsgemäße Kennungs- und Notrufsignalauswerter mit den kennzeichnenden Merkmalen des Hauptanspruchs hat den Vorteil, daß das Überwachen von Kennungssignalen und Notrufsignalen in den zentralen Funkstationen erleichtert wird und daß Fehlidentifikationen von mobilen Funkstationen weitgehend vermieden werden.

Durch die in den Unteransprüchen aufgeführten Maßnahmen sind vorteilhafte Weiterbildungen und Verbesserungen des im Hauptanspruch angegebenen Kennungs- und Notrufsignalauswerters möglich. Besonders vorteilhaft ist es, wenn die Zusatzeinrichtung des Kennungssignal- und Notrufsignalauswerters einer jeden zentralen Funkstation eine einstellbare Codiervorrichtung zum Einstellen des für die betreffende zentrale Funkstation charakteristischen Kennungssignalteils aufweist.

### Beschreibung der Erfindung

In einem Sprechfunknetz mit mehreren zentralen Funkstationen ist dem Funkgebiet einer jeden zentralen Funkstation eine bestimmte Zahl von mobilen Funkstationen zugeordnet. Die mobilen Funkstationen senden mindestens vor jedem Gesprächswunsch ein Kennungssignal und im Notfall ein Notrufsignal an die zentrale Funkstation aus, in deren Funkgebiet sie sich gerade aufhalten.

Kennungssignal und Notrufsignal enthalten einen Kennungssignalteil, der angibt, zu welchem Funkgebiet bzw. zu welcher zentralen Funkstation die mobile Funkstation gehört.

Der Kennungs- und Notrufsignalauswerter einer jeden zentralen Funkstation hat eine Zusatzeinrichtung, die auf den für die betreffende zentrale Funkstation charakteristischen Kennungssignalteil eingestellt ist. Die Zusatzeinrichtung erkennt alle Kennungssignalteile von mobilen Funkstationen, die im Funkversorgungsgebiet operieren. Hat die Zusatzeinrichtung einen Kennungssignalteil als mit dem voreingestellten Kennungssignalteil übereinstimmend erkannt, dann sorgt sie dafür, daß dieser Kennungssignalteil auf einer zu der zentralen Funkstation gehörenden Anzeigevorrichtung nicht angezeigt wird oder daß anstelle der ziffernmäßigen Anzeige des Kennungssignalteils lediglich gleiche Symbole, das sind vorzugsweise Punkte, angezeigt werden. Die Punkte bedeuten dann, daß die Zusatzeinrichtung einwandfrei arbeitet. Wegen der Unterdrückung des für ein Funkgebiet gemeinsamen Kennungssignalteils ist das angezeigte Kennungs- bzw. Notrufsignal erheblich kürzer und übersichtlicher als das vollständige Signal.

Nur in dem Sonderfall, daß Kennungs- oder Notrufsignale von mobilen Funkstationen mit abweichendem gemeinsamen Kennungssignalteil empfangen werden, bewirkt die Zusatzeinrichtung, daß das vollständige Kennungssignal bzw. Notrufsignal angezeigt wird.

Die Zusatzeinrichtungen könnten mit Lötbrücken oder ähnlichem codiert werden oder enthalten beispielsweise je einen einstellbaren Codierschalter, an dem der für die betreffende zentrale Funkstation charakteristische Kennungssignalteil eingestellt werden kann. Zu der Zusatzeinrichtung kann auch ein digitaler Speicher zum Speichern des gemeinsamen Kennungssignalteils gehören (zum Beispiel Festwertspeicher oder Schreib-Lesespeicher).

Da der gemeinsame Kennungssignalteil nicht nur das Funkversorgungsgebiet, sondern auch die Art des Funkdienstes (»BOS«), zum Beispiel einen Sicherheitsdienst, kennzeichnet, kann es zweckmäßig sein, in bestimmten Fällen die zentralen Funkstationen mit mehr als einer Zusatzeinrichtung auszurüsten und diese Zusatzeinrichtungen auf je einen der Funkdienste einzustellen.

Die Anzeige eines Notrufsignals erfolgt in der gleichen Weise wie die Anzeige eines Kennungssignals. Je nachdem, ob die notrufende mobile Funkstation aus dem zugeordneten Funkgebiet oder aus einem anderen Funkgebiet stammt, wird in der zentralen Funkstation entweder das Notrufsignal ohne den Kennungssignalteil oder mit dem Kennungssignalteil angezeigt.

Zum deutlichen Erkennen des Vorliegens eines Notrufs blinkt beispielsweise in der zentralen Funkstation das angezeigte Notrufsignal in einem bestimmten Rhythmus auf. Zusätzlich kann auch noch ein akustisches Notrufsignal ausgelöst werden.

Da in Notsituationen oft nicht nur eine einzige mobile Funkstation, sondern mehrere mobile Funkstationen ein Notrufsignal aussenden, ist es zweckmäßig, in der zentralen Funkstation einen Notrufspeicher, zum Beispiel einen Halbleiterspeicher, vorzusehen, der dafür sorgt, daß die Notrufe nacheinander angezeigt werden.

Jedem Kennungs- und Notrufsignalauswerter ist eine Löschtaste zugeordnet, die bei der ersten Betätigung das akustische Notrufsignal abschaltet und bei der zweiten Betätigung automatisch das nächste in dem Notrufspeicher gespeicherte Notrufsignal zur Anzeige bringt. Es wird dem Benutzer freigestellt, mittels einer Codierung zu entscheiden, ob aus dem Notrufspeicher nachfolgende Notrufanzeigen mit oder ohne akustischem Notrufsignal angezeigt werden.

**Patentansprüche**

1. Kennungs- und Notrufsignalauswerter für zentrale Funkstationen, denen je eine bestimmte Anzahl von mobilen Funkstationen zugeordnet ist, die in Notfällen auch in einem Funkgebiet einer ihnen nicht zugeordneten zentralen Funkstation operieren können und die beim Betätigen ihrer Sendetaste ein für sie charakteristisches mehrstelliges Kennungssignal bzw. beim Betätigen einer Notruftaste ein aus dem Kennungssignal und einem Notrufkriterium bestehendes Notrufsignal an die zentrale Funkstation aussenden, wobei sich die Kennungs- und Notrufsignale der mobilen Funkstationen verschiedener Funkgebiete durch den Informationsinhalt eines eine bestimmte Stellenzahl des Kennungssignals umfassenden Kennungssignalteils unterscheiden und wobei die Kennungs- und Notrufsignale in der zentralen Funkstation ausgewertet und mit einer Anzeigevorrichtung angezeigt werden, dadurch gekennzeichnet, daß der Kennungs- und Notrufsignalauswerter einer jeden zentralen Funkstation eine Zusatzeinrichtung aufweist, die beim Empfang von Kennungs- und Notrufsignalen von im Funkbereich der zugeordneten zentralen Funkstationen operierenden mobilen Funkstationen die Anzeige des Kennungssignalteils eines jeden Kennungs- und Notrufsignals unterdrückt oder untereinander gleiche Symbole anzeigt, während die Zusatzeinrichtung Kennungs- und Notrufsignale von nicht in dem Funkbereich der ihnen zugeordneten zentralen Funkstation operierenden mobilen Funkstationen vollständig anzeigt.

2. Kennungs- und Notrufsignalauswerter nach Anspruch 1, dadurch gekennzeichnet, daß die Zusatzeinrichtung des Kennungs- und Notrufsignalauswerters einer jeden zentralen Funkstation eine einstellbare Codiereinrichtung zum Einstellen des für die betreffende zentrale Funkstation charakteristischen Kennungssignalteils aufweist.

3. Kennungs- und Notrufsignalauswerter nach Anspruch 2, dadurch gekennzeichnet, daß die Codiereinrichtungen der Zusatzeinrichtungen je einen digitalen Speicher zum Speichern der Signale des Kennungssignalteils aufweisen.

4. Kennungs- und Notrufsignalauswerter nach den Ansprüchen 1 bis 3, dadurch gekennzeichnet, daß jede zentrale Funkstation zwei oder mehrere Zusatzeinrichtungen aufweist.

5. Kennungs- und Notrufsignalauswerter nach Anspruch 1, dadurch gekennzeichnet, daß den Kennungs- und Notrufsignalauswertern je eine Signaleinrichtung nachgeschaltet ist, die im Falle des Empfangs eines Notrufsignals in einer zentralen Funkstation zusätzlich zu der Anzeige des Notrufsignals ein optisches und/oder akustisches Signal auslöst.

6. Kennungs- und Notrufsignalauswerter nach Anspruch 1, dadurch gekennzeichnet, daß jede zentrale Funkstation einen Notrufsignalspeicher aufweist, der die in der zentralen Funkstation ausgewerteten Notrufsignale verschiedener mobiler Funkstationen speichert und automatisch ein Notrufsignal nach dem anderen der Anzeigevorrichtung zuführt.

7. Kennungs- und Notrufsignalauswerter nach Anspruch 6, dadurch gekennzeichnet, daß jedem Kennungs- und Notrufsignalauswerter eine Löschtaste zugeordnet ist, nach deren jedesmaligem Betätigen ein gerade angezeigtes Notrufsignal im Notrufsignalspeicher gelöscht und das jeweils nächste im Notrufsignalspeicher gespeicherte Notrufsignal der Anzeigevorrichtung zugeführt wird.

8. Kennungs- und Notrufsignalauswerter nach Anspruch 7, gekennzeichnet durch eine Löschtaste, die bei einem ersten Betätigen des gerade angezeigte Notrufsignal im Notrufsignalspeicher löscht und ein gleichzeitig mit der Notrufanzeige ausgelöstes akustisches Notrufsignal abschaltet und die bei einem zweiten Betätigen das jeweils nächste im Notrufsignalspeicher gespeicherte Notrufsignal der Anzeigevorrichtung zuführt.

## Claims

1. Device for interpreting identification and emergency call signals for central radio stations, to each of which is associated a specific number of associated mobile radio stations which, in, emergencies, can also operate in a radio zone of a central radio station not associated with them and which, upon actuation of their transmitting key, transmit a multi-digit identification signal characteristic of them, or upon actuation of an emergency call key transmit to the central radio station an emergency call signal comprising the identification signal and an emergency call criterion, the identification and emergency call signals of the mobile radio stations of different radio zones differing from one another by the data content of a portion of the identification signal which comprises a predetermined number of digits of the identification signal, and the identification and emergency call signals being interpreted in the central radio station and being indicated by an indicator, characterised in that the identification and emergency call signal interpreter of each central radio station has an additional device which, upon the reception of identification and emergency call signals from mobile radio stations operating in the radio zone of the associated central radio stations, suppresses indication of the identification signal portion of each identification and emergency call signal or indicates symbol which are identical to one another, while the additional device fully indicates identification and emergency call signals from mobile radio stations which are not operating in the radio zone of their associated central radio station.

2. Device for interpreting identification and emergency call signals as claimed in claim 1, characterised in that the additional device of the identification and emergency call signal interpreter of each central radio station has an adjustable coding device for setting the identification signal portion characterising the relevant central radio station.

3. Device for interpreting identification and emergency call signals as claimed in claim 2, characterised in that each of the coding devices of the additional devices has a digital memory for storing the signals of the identification signal portion.

4. Device for interpreting identification and emergency call signals as claimed in claims 1 to 3, characterised in that each central radio station hat two or more additional devices.

5. Device for interpreting identification and emergency call signals as claimed in claim 1, characterised in that a respective signalling device is connected to the output of each identification and emergency call signal interpreting device, and in the event of the reception of an emergency call signal in a central radio station, triggers an optical and/or acoustic signal in addition to the indication of the emergency call signal.

6. Device for interpreting identification and emergency call signals as claimed in claim 1, characterised in that each central radio station is provided with an emergency signal memory which stores the emergency call signals of various mobile radio stations which are interpreted in the central radio station and automatically fees one emergency call signal after the other to the indicator.

7. Device for interpreting identification and emergency call signals as claimed in claim 6, characterised in the each identification and emergency call signal interpreter has an associated ease key and, after each actuation thereof, an emergency call signal in the emergency call signal memory which signal has just been indicated, is erased and the next emergency call signal stored in the emergency call signal memory is fed to the indicator.

8. Device for interpreting identification and emergency call signals as claimed in claim 7, characterised by an erase key which, upon a first actuation thereof, erases the emergency call signal in the emergency call signal memory which signal has just been indicated, and switches off an acoustic emergency call signal triggered simultaneously with the emergency call indication and, upon a second actuation thereof, feeds the next emergency call signal stored in the emergency call signal memory to the indicator.

## Revendications

1. Dispositif d'exploitation de signaux d'identification et d'appels d'urgence pour des stations radio-centrales à chacune desquelles est associé un certain nombre de stations radio mobiles, qui, en cas d'urgence, peuvent également opérer dans un territoire radio d'une station radio centrale qui ne leur est pas associée, et qui, lors de l'actionnement de leurs touches d'émission émettent vers la station radio centrale un signal d'identification à plusieurs chiffres qui les caractérisent ou bien qui, lors de l'actionnement d'une touche d'appel d'urgence, émettent vers cette station centrale un signal d'appel d'urgence constitué du signal d'identification et d'un critère d'appel d'urgence, les signaux d'identification et les signaux d'appel d'urgence des stations radio mobiles de différents territoires radio, se différenciant par les contenus d'informations d'une partie du signal d'identification comprenant un nombre déterminé à plusieurs chiffres de ce signal d'identification, les signaux d'identification et les signaux d'appel d'urgence étant exploités dans la station radio centrale et affichés par un dispositif d'affichage, dispositif d'exploitation caractérisé en ce que ce dispositif d'exploitation des signaux d'identification et des signaux d'appel d'urgence de chaque station radio centrale, comporte une installation supplémentaire qui, lors de la réception de signaux d'identification et de signaux d'appel d'urgence en provenance de stations radio mobiles opérant dans le domaine radio des stations centrales qui leurs sont associées, supprime l'affichage de la partie du signal d'identification d'un tel signal d'identification et d'un tel signal d'appel d'urgence ou bien affiche des symboles identiques entre eux, tandis que cette installation supplémentaire affiche complètement les signaux d'identification et les signaux d'appel d'urgence en provenance de stations radio mobiles n'opérant pas dans le domaine radio de la station radio centrale qui leur est associée.

2. Dispositif d'exploitation de signaux d'identification et de signaux d'appel d'urgence selon la revendication 1, caractérisé en ce que l'installation supplémentaire du dispositif d'exploitation de signaux d'identification et de signaux d'appel d'urgence de n'importe quelle station radio centrale, comporte une installation de codage réglable pour le réglage de la partie du signal d'identification caractéristique pour la station centrale radio considérée.

3. Dispositif d'exploitation de signaux d'identification et de signaux d'appel d'urgence selon la revendication 2, caractérisé en ce que les installations de codage des installations supplémentaires comportent chacune une mémoire numérique pour mémoriser les signaux de la partie du signal d'identification.

4. Dispositif d'exploitation de signaux d'identification et de signaux d'appel d'urgence selon l'une quelconque des revendications 1 à 3, caractérisé en ce que chaque station centrale comporte deux ou plusieurs installations supplémentaires.

5. Dispositif d'exploitation de signaux d'identification et de signaux d'appel d'urgence selon la revendication 1, caractérisé en ce que, à la suite de chacun des dispositifs d'exploitation de signaux d'identification et de signaux d'appel d'urgence, est branchée une installation de signalisation, qui, dans le cas de la réception d'un signal d'appel d'urgence dans une station radio centrale, délivre en supplément à l'affichage du signal d'appel d'urgence, un signal optique et/ou acoustique.

6. Dispositif d'exploitation de signaux d'identification et de signaux d'appel d'urgence selon la revendication 1, caractérisé en ce que chaque station radio centrale comporte une mémoire de signaux d'appels d'urgence qui emmagasine les signaux d'appels d'urgence exploités dans la station centrale de différentes stations radio mobiles et délivre automatiquement au dispositif d'affichage, les signaux d'appels d'urgence l'un après l'autre.

7. Dispositif d'exploitation de signaux d'identification et de signaux d'appels d'urgence selon la revendication 6, caractérisé en ce que, à chaque dispositif d'exploitation de signaux d'identification et de signaux d'appel d'urgence, est associée une touche d'effacement, qui chaque fois qu'elle est actionnée efface dans la mémoire de signaux d'appels d'urgence, un signal d'appel d'urgence dûment affiché, tandis que le signal d'appel d'urgence emmagasiné immédiatement après dans la mémoire de signaux d'appels d'urgence, est respectivement délivré au dispositif d'affichage.

8. Dispositif d'exploitation de signaux d'identification et d'appels d'urgence selon la revendication 7, caractérisé en ce qu'il comporte une touche d'effacement qui, lors d'un premier actionnement, efface dans la mémoire des signaux d'appels d'urgence le signal d'appel d'urgence dûment affiché, et coupe un signal acoustique d'appel d'urgence déclenché simultanément avec l'affichage d'appel d'urgence, cependant que lors d'un second actionnement, elle applique au dispositif d'affichage, le signal d'appel d'urgence emmagasiné respectivement immédiatement après dans la mémoire des signaux d'appels d'urgence.

Vor-lauf  Blocksynchronisat.  BOS  Land  Ort  Fahrzeug-Nr.  Status  Diverse Informat.

`0  1 0 0 0 1 1 0 1 0 0 0 1 0 1 1 1 0 1 0 0 0 0 1 0 0 1 1 0 0 0  0 0 1 0 0 1 1 0 1 0`

Stelle — Kennungssignalteil — Kennungs- bzw. Notrufsignal — Datentelegramm

0015 313